# EUROPÄISCHE PATENTSCHRIFT

(11) **EP 1 618 778 B1**
(45) Veröffentlichungstag und Bekanntmachung des Hinweises auf die Patenterteilung: **07.11.2007**
(21) Anmeldenummer: 05014504.4
(22) Anmeldetag: 05.07.2005
(51) Int. Cl.: A01D 78/10

(54) **Kreiselschwader**
Rotary swather
Andaineuse rotative

(30) Priorität: 20.07.2004 DE 102004035082
(43) Veröffentlichungstag der Anmeldung: 25.01.2006
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- EP-A- 0 548 720
- EP-A- 0 937 382
- DE-A1- 4 128 586
- DE-B- 1 235 058

## Beschreibung

Die Erfindung betrifft einen Kreiselschwader gemäß dem Oberbegriff des unabhängigen Anspruchs 1.

Kreiselschwader sind angetriebene landwirtschaftliche Arbeitsgeräte und sie dienen dem Zweck, am boden liegendes Futter während der Fahrbewegung zu einem oder auch mehreren Schwaden zusammenzurechen.

Kreiselschwader mit mehreren Rechkreiseln können sowohl als Seitenschwader als auch als Mittelschwader ausgebildet sein. Dabei sind Ausführungsformen bekannt, bei den die auf Tast und Stützrädern am Boden abgestützten Rechkreisel an hochklappbaren Auslegern geführt werden. Die Ausleger der Rechkreisel sind dabei in Klappgelenken mit dem Maschinengestell des Kreiselschwaders verbunden und werden zur Überführung in ihre Transportstellung um etwa 90° hochgeklappt, um die Abmessungen des zulässigen Straßentransportprofils des Kreiselschwaders nicht zu überschreiten.

Damit die Rechkreisel im laufenden Arbeitsprozess die Forderung erfüllen können, sich wechselnden Bodenunebenheiten, wie Senken und Kuppen bodenkopierend anzupassen, müssen den Rechkreiseln entsprechende Freiheitsgrade der Bewegung eingeräumt werden, die Ihnen dieses zumindest in einem hinreichenden wenn auch eingeschränktem Umfang ermöglichen. Es handelt sich dabei um die Freiheitsgrade der vertikalen Höhenbeweglichkeit und der Roll- und Nickbewegung relativ zum Maschinengestell.

Neben der Funktion des Hoch- und Herunterklappens der Rechkreisel - es handelt sich hierbei in erster Linie um eine Lageveränderung der Rechkreisel zum einen in die Transportstellung und zum anderen in die Arbeitsstellung - kommt den Auslegern in der Arbeitsstellung die weitere Funktion zu, ihnen den Freiheitsgrad der Bewegung in der Höhenlage einzuräumen. Dieser Freiheitsgrad wird eingeräumt durch die Schwenkbeweglichkeit der Ausleger um die Klappachsen in den Klappgelenken, die sich am Maschinengestell des Kreiselschwaders befinden.
Am äußeren Ende der Ausleger sind die Rechkreisel gelenkig an diesem angelenkt, wobei die Gelenkachsen oberhalb der Rechkreisel in der Nähe der Rotationsachse eines Rechkreisels in Fahrtrichtung verlaufen. Dieser Freiheitsgrad ermöglicht es den Rechkreisein Bewegungen zur Bodenanpassung im Sinne von Rollbewegungen auszuführen.

Von einer kardanischen Anlenkung der Rechkreisel ist im allgemeinen Sprachgebrauch dann die Rede, wenn der Anlenkung der Rechkreisel eine weitere Gelenkachse zugeordnet ist, die zusätzlich zur Höhen- und Rollbeweglichkeit auch die Nickbewegung ermöglicht. Die in der Praxis bekannte Lösung sieht dazu in der Anlenkkinematik ein weiteres Gelenk mit einer Gelenkachse quer zur Fahrtrichtung verlaufend vor, welches sich ebenfalls oberhalb der Rechkreisel und am äußeren Ende eines Auslegers befindet.

Bekannt sind dabei sowohl ein- als auch mehrstückige Ausleger, wobei mehrstückig sich auf längenveränderbar, beispielsweise teleskopierbar, bezieht. Dieses wird genutzt, um beispielsweise die Arbeitsbreite eine Kreiselschwaders zu verstellen zu verstellen, oder auch um dessen Transporthöhe zu reduzieren.

Den Tasträdern unterhalb der Rechkreisel kommt dabei die Funktion der Bodenkopierung zu

Jedem Rechkreisel ist ein Ausleger zugeordnet, der sich ausgehend von seiner Anlenkstelle im Klappgelenk am Maschinengestell etwa in Richtung des Zentrums oberhalb eines Rechkreisels erstreckt.

Nachteilig dabei ist, dass bei dieser Anordnung und Ausgestaltung der Anlenkung der Rechkreisel an seinem Ausleger, in seiner Bewegungsfreiheit um die zuvor beschriebene Rollachse insofern eingeschränkt ist, als dass die Zinkenarme des Rechkreisels bei größeren Rollbewegungen des Rechkreisels mit dem Ausleger kollidieren können. Um dieses zu vermeiden, sind Beschränkungen des Dreh- bzw. Schwenkwinkels der Rollbewegung vorzusehen, damit eine Kollision bei größeren Rollwinkeln als vorgesehen, vermieden werden. Dieses führt in der Konsequenz auch dazu, das die Rotationsachse der Rechkreisel insbesondere in der ausgehobenen Rechkreisel am Vorgewende nicht etwa lotrecht zum Boden ausgerichtet ist, - was wünschenswert ist - sondern stark geneigt ist, um eben jene Kollision zu vermeiden.

Ein weiterer Nachteil besteht darin, dass bei Ausführungen nach dem Stand der Technik die Rechkreisel im Vorgewende zum Überfahren der bereits abgelegten Schwaden nicht parallel zum Boden ausgehoben werden können, welches dazu führt, dass die Kreiselachsen dann gegenüber dem Boden geneigt sind, und die Rechkreisel dann höher ausgehoben werden müssen, als dieses erforderlich wäre, wenn die Aushebung parallel zum Boden erfolgen könnte. Ein weiterer Nachteil besteht darin, das die anschließende Absenkung der Rechkreisel stets die Gefahr in sich birgt, dass die schräg aufsetzende Rechkreisel dann mit ihren Zinkenspitzen die Grasnarbe beschädigen.

Ein weiterer Nachteil besteht darin, dass die Zinkenspitzen in der hochgeklappten Stellung der Rechkreisel nach außen weisen und somit potentiell eine Gefahrenquelle für Stichverletzungen bilden.

Die Aufgabe der Erfindung wird somit darin gesehen, die zuvor dargelegten Nachteile durch eine verbesserte Anlenkkinematik der Rechkreisel an das Maschinengestell eines Kreiselschwaders zu vermeiden.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht vor, die Rechkreisel eines Kreiselschwaders so mit einem Maschinengestell in Verbindung zu bringen, dass einem Rechkreisel zwei Ausleger zugeordnet sind, wobei der erste Ausleger dem Rechkreisel vorgelagert und der zweite Ausleger dem Rechkreisel nachgelagert ist, so dass der Ausleger selbst nicht die Ursache für eine Einschränkung des Schwenkwinkels eines Rechkreisels um dessen Rollachse darstellt.

In besonders vorteilhafter Weise ist der Rechkreisel gelenkig an jedem der beiden Ausleger angelenkt. Beide Ausleger bilden somit ein Paar, wobei jeder Ausleger unabhängig vom anderen Schwenkbewegungen ausführen kann. Die Anlenkpunkte des Auslegerpaars an dem ihm zugeordneten Rechkreisel sind als Gelenke ausgebildet. In besonders vorteilhafter Weise sind sie als sphärische Gelenke (Kardangelenke) ausgebildet, beispielsweise als Kugel- oder Kreuzgelenke.

In einer weiteren Ausgestaltung kann eines der Gelenke als Festlager, und das andere Gelenk als Loslager ausgeführt ist. Das Loslager dient dabei als Schiebesitzverbindung um damit Abstandsänderungen zwischen den Gelenken, die mit Nickbewegungen der Rechkreisel einhergehen können, ausgleichen zu können.

Diese erfinderischen Ausgestaltung der Anlenkung eines Rechkreisels an ein Maschinengestell ist eine besonders einfache und robuste Ausführungsform einer kardanischen Anlenkung eines Rechkreisel an ein Maschinengestell.

Zusätzlich beinhaltet diese Art der Anlenkung auch die Möglichkeit, die Rechkreisel etwa parallel zum Boden auzuheben, welches gerade im Vorgewende erheblich von Vorteil ist, da somit die Aushubhöhe zum Überfahren bereits abgelegte Schwaden gering bleibt, welches unnötige Zeitverluste im Vorgewende erspart.

Weiterhin beinhaltet dieses den Vorteil, dass der Rechkreisel ebenso parallel wieder am Boden abgesetzt werden kann, ohne das Zinkenspitzen dabei in die Grasnabe eindringen und diese verletzen könnte.

Ein ganz wesentlicher Vorteil jedoch besteht darin, das der Rechkreisel zur Überführung in seine Transportstellung während des Hochschwenkens um die Klappachsen der Klappgelenke völlig unbehindert durch diese Art der Anlenkung um mehr als 180° verschwenkt werden kann, so dass die Zinkenspitzen der Rechzinken nicht nach außen, sondern nach innen in das innere des Kreiselschwaders gerichtet sind. Dieses mindert das Gefährdungspotential, welches von den nach außen gerichteten Zinkenspitzen ausgeht.

Wahlweise können die Tast- und Stützräder dabei unterhalb oder außerhalb des Rechkreisels angeordnet sein. Auch ist eine Kombination dieser beiden Möglichkeiten durchaus möglich.

Durch den vorgelagerten Ausleger ist für den Rechkreisel gleichzeitig ein stabiler und robuster Anfahrschutz gegeben, wobei der Ausleger als Anfahrschutz auch über den Gelenkpunkt als Anlenkpunkt hinweg geführt werden kann. Werden beide Ausleger des Auslegerpaars außenseitig miteinander durch eine Verbindungsstrebe verbunden, so ergibt sich dadurch ein rundum Schutzbügel für einen Rechkreisel, der als verbesserter Rammschutz dienen kann.

Nähere Einzelheiten der Erfindung sind den nachfolgenden Figurendarstellungen und deren Beschreibungen zu entnehmen.

### Bezugszeichenliste

- 1: Kreiselschwader
- 2: Maschinengestell
- 3: Kupplungseinrichtung
- 4: Fahrwerk
- 5: Stützrad
- 6: Rechkreisel
- 7: vorderer Auslegerarm
- 8: hintere Auslegerarm
- 9: Kreiselachse
- 10: Konturenkreis
- 11: vorderes Klappgelenk
- 12: Gelenkachse
- 13: hinteres Klappgelenk
- 14: Gelenkachse
- 15: Rollachse
- 16: Nickachse
- 17: vorderer Anlenkpunkt
- 18: hinterer Anlenkpunkt
- 19: seitlicher Längsträger
- 20: vorderer Kragarm
- 21: hinterer Kragarm
- 22: Lagergehäuse
- 23: Flanschverbindung
- 24: Gelenkkugel
- 25: Anschlagscheibe
- 26: Sechskantschraube
- 27: Lagerzapfen
- 28: Zapfenschulter
- 29: vertikale Längsmittelebene
- 30: Rechzinken
- 31: Zinkenspitze
- 32: Abstand
- 33: Zugfahrzeug
- 34: Stütz- und Tastrad
- 35: Teleskopik
- 36: Umlaufbewegung
- 37: Schwenkwinkel
- 38: Schwenkrichtung
- 39: Aufstandsfläche

- F: Fahrtrichtung

es zeigen:
- Fig. 1: ein Ausführungsbeispiel eines Kreiselschwaders nach dem Stand der Technik in einer Draufsicht
- Fig. 2: ein Ausführungsbeispiel eines Kreiselschwaders nach der Erfindung in einer Draufsicht
- Fig. 2a: Einzelheit "A" gemäß Fig. 2 in einer vergrößerten Schnittdarstellung
- Fig. 2b: Einzelheit "B" gemäß Fig. 2 in einer vergrößerten Schnittdarstellung
- Fig.3: ein Ausführungsbeispiel eines Kreiselschwaders gemäß Fig. 2 in perspektivischer Ansicht in einer Draufsicht mit Blickrichtung entgegen der Fahrtrichtung
- Fig. 4: ein Ausführungsbeispiel eines Kreiselschwaders gemäß Fig. 2 in perspektivischer Ansicht in einer Ansicht entgegen der Fahrtrichtung in Transportstellung
- Fig. 5: ein Ausführungsbeispiel eines Kreiselschwaders gemäß Fig. 2 in einer Seitenansicht in Transportstellung
- Fig. 5a: ein Ausführungsbeispiel eines Kreiselschwaders gemäß Fig. 2 in einer Seitenansicht in Transportstellung mit einer Teleskopik im Längsträger
- Fig. 6: ein Ausführungsbeispiel eines Kreiselschwaders gemäß Fig. 2 in einer Ansicht von hinten und in Fahrtrichtung in Transportstellung
- Fig. 7: Kreiselschwader in einer Stellung im Vorgewende
- Fig.8: Kreiselschwader in teils überführter Transportstellung
- Fig.8a: Kreiselschwader in einer teils weiter überführter Transportstellung
- Fig. 9: ein alternatives Ausführungsbeispiel eines Kreiselschwaders nach der Erfindung.
- Fig. 10: alternatives Ausführungsbeispiel eines Kreiselschwaders nach Fig. 7 in Transportstellung.

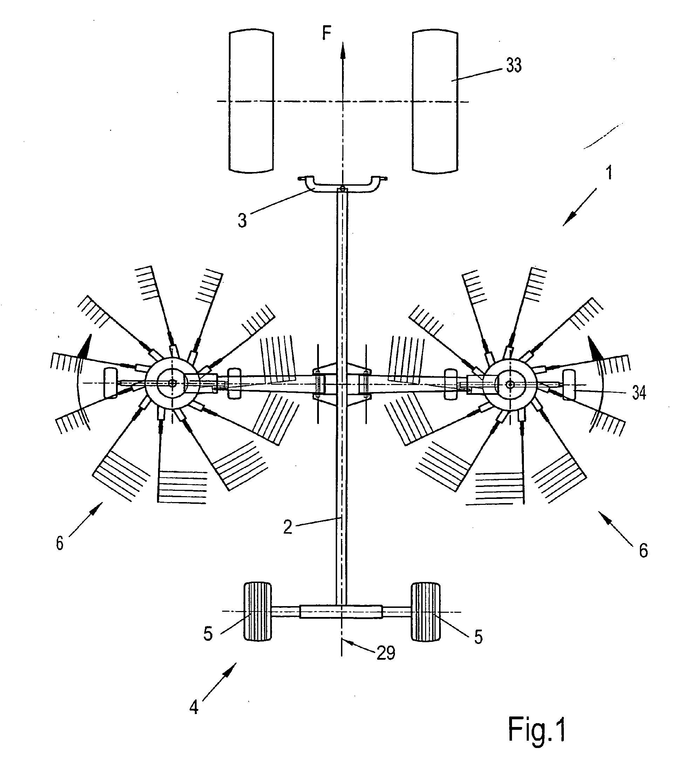

Fig. 1 zeigt einen an ein Zugfahrzeug 33 angehängten Kreiselschwader 1, der sich während seiner Arbeit im Betriebszustand in Fahrtrichtung F bewegt, ausgeführt als 2-Kreiselschwader nach dem Stand der Technik. Jeder Rechkreisel 6 ist mit einem zentral am Rechkreisel 6 angelenkten Ausleger gelenkig mit dem Maschinengestell 2 verbunden und stützt sich dabei auf seinen Stütz- und Tasträdern 34 am Boden ab. Das Maschinengestell 2 ist mit einer Kupplungseinrichtung 3 mit einem Zugfahrzeug 33 verbunden, wobei sich das Maschinengestell 2 mittels eines Fahrwerks 4 auf dessen Stützrädern 5 abstützt. In dem Ausführungsbeispiel sind die Rechkreisel 6 symmetrisch zur vertikalen Längsmittelebene 21 angeordnet, so das dieses Ausführungsbeispiel zum Stand der Technik beispielsweise einen Mittelschwader repräsentiert.

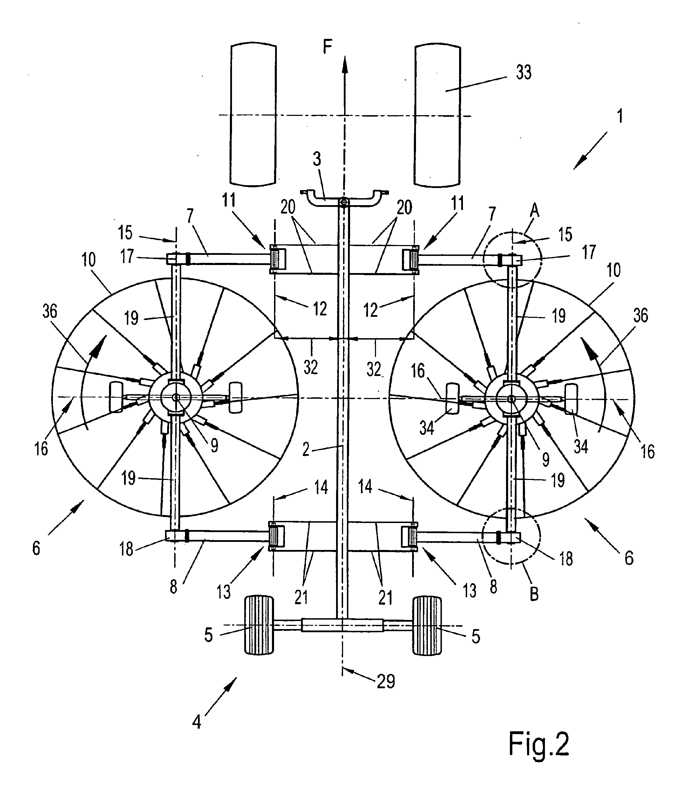

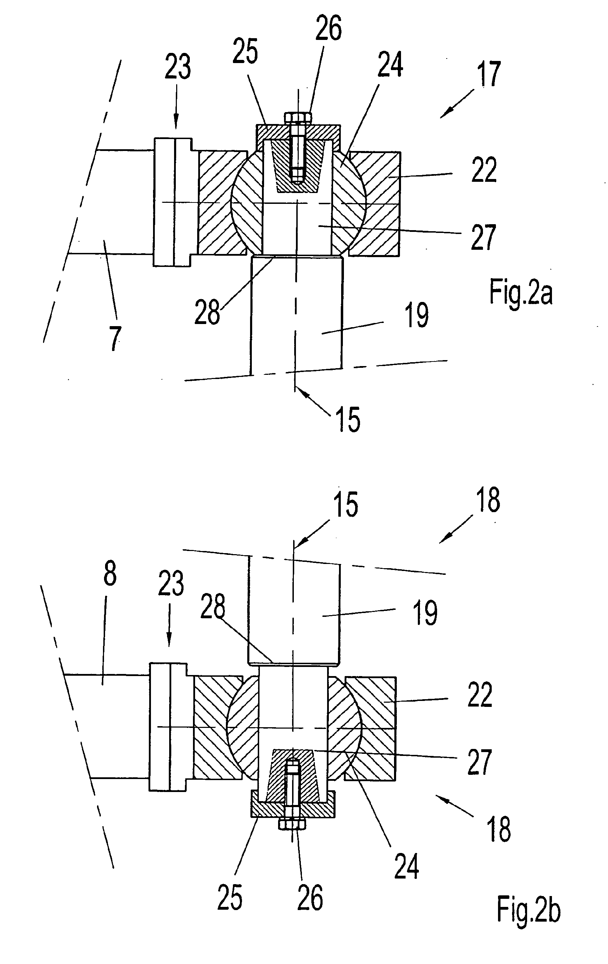

Fig. 2 hingegen zeigt ein Ausführungsbeispiel eines Kreiselschwaders 1 ähnlich Fig. 1, jedoch ausgeführt mit einer Anlenkung der Rechkreisel 6 an das Maschinengestell 2 nach der Erfindung. Die vereinfacht dargestellten Rechkreisel 6 sind mittels einem Auslegerpaar, bestehend aus einem vorderen Auslegerarm 7 und einem hinteren Auslegerarm 8, mittels Gelenkverbindungen in den vorderen bzw. hinteren Anlenkpunkten 17,18 an das Maschinengestell 2 gebunden. Dabei definieren die radial außenliegenden Konturen der Zinkenarme eines Rechkreisels 6 mit den daran befestigten Rechzinken 30 während ihrer Umlaufbewegung 36 um die Kreiselachsen 9 den Konturenkreis 10.

Die Auslegerarme 7,8 sind dabei an ihrem gebundenen, d.h. dem Tragrahmen 2 zugewandten Ende, in den Gelenkpunkten, ausgebildet als vorderes Klappgelenk 11 mit dessen Gelenkachse 12 bzw. hinteres Klappgelenk 13 mit dessen Gelenkachse 14, gebunden.

Die Schwenkbeweglichkeit der Ausleger 7,8 dient einerseits der Bodenanpassung hinsichtlich der Höhenunterschiede im kopierten Gelände und anderseits zum Anheben der Rechkreisel 6 im Vorgewende bzw. zum vollständigen Hochklappen der Rechkreisel 6 in ihre Transportstellung.

Die Klappgelenke 11 bzw. 13 befinden sich an den freien Enden der Kragarme, und zwar an den vorderen Kragarmen 20 und den hinteren Kragarmen 21, die starr mit dem Maschinengestell 2 verbunden sind.

Der Rechkreisel 6 ist in seinem Zentrum an einen Längsträger 19 eingebunden, der etwa parallel zu dem Träger des Maschinengestells 2 bzw. etwa parallel zur vertikalen Längsmittelebene 29 verläuft. Der Längsträger 19 besitzt an beiden Enden je einen Lagerzapfen 27, die jeweils von Lagern, welche die Anlenkpunkte 17 und 18 bilden, aufgenommen werden.

Die Anlenkpunkte 17 und 18 sind vorteilhafter weise als sphärische Gelenke, beispielsweise als Kugel- oder Kardangelenke, ausgebildet. In den Fig. 2a und Fig.2b sind diese Gelenke gemäß den Einzelheiten A und B als Ausführungsbeispiel als Kugelgelenke vergrößert und im Schnitt dargestellt.

Fig. 2a zeigt das Gelenk als vorderen Anlenkpunkt 17, ausgebildet als Festlager. Die aufgebohrte Gelenkkugel 24 nimmt den Lagerzapfen 27 in einem Presssitz auf. Die Gelenkkugel 24 findet ihren Lagersitz in dem Lagergehäuse 22 und kann sich in diesem in bekannter Weise räumlich drehen. Die Gelenkkugel 24 wird mit der Sechskantschraube 26, die an der Anschlagscheibe 25 anliegt, gegen die Zapfenschulter 28 als Widerlager axial verspannt und ist somit als Festlager definiert.

Fig. 2b zeigt das Gelenk als hinteren Anlenkpunkt 18 ausgebildet als Loslager. Die aufgebohrte Gelenkkugel 24 nimmt den Lagerzapfen 27 in einer Spielpassung, die gleichzeitig als axiale Schiebesitzverbindung dient, auf. Die Gelenkkugel 24 findet ihren Lagersitz in dem Lagergehäuse 22 und kann sich in diesem in bekannter Weise räumlich drehen. Die Gelenkkugel 24 kann sich demzufolge auf dem Lagerzapfen 27 axial verschieben, wobei die Verschiebung einerseits durch die von der Gelenkkugel 24 beabstandeten Zapfenschulter 28 und andererseits von der von der Gelenkkugel 24 beabstandeten Schulter gebildet durch die Anschlagscheibe 25, die mit einer Sechskantschraube 26 mit dem Lagerzapfen 24 axial verspannt ist.

Beide Lagergehäuse 22 können als Fußlager ausgebildet sein und mittels einer Flanschverbindung 23 mit dem jeweiligen Auslegerarm 7,8 lösbar verbunden sein.

Die beiden Ausleger 7 und 8 sind in der Betriebs- bzw. Arbeitsstellung um ihre Gelenkachsen 12 bzw. 14 der Klappgelenke 11 und 13 frei schwenkbeweglich und ebenso frei schwenk- bzw. drehbeweglich um die Drehachse 15 der Lagerzapfen 27 gelagert.

Diese Anlenkung der Rechkreisel 6 ermöglicht es, dass die Rechkreisel 6 der Bodenkopierung, welche von den Stütz- und Tasträder 34 der Rechkreisel 6 vom Bodenrelief abgegriffen wird, vollständig folgen können durch vertikale Höhen-, Nick- und Rollbewegungen.

Nickbewegungen verlaufen dabei um eine quer zur Fahrtrichtung F verlaufende Nickachse 16, beispielsweise um die Radachsen der Tasträder 34 und Rollbewegungen um die Rollachse 15 in Fahrtrichtung F verlaufend.

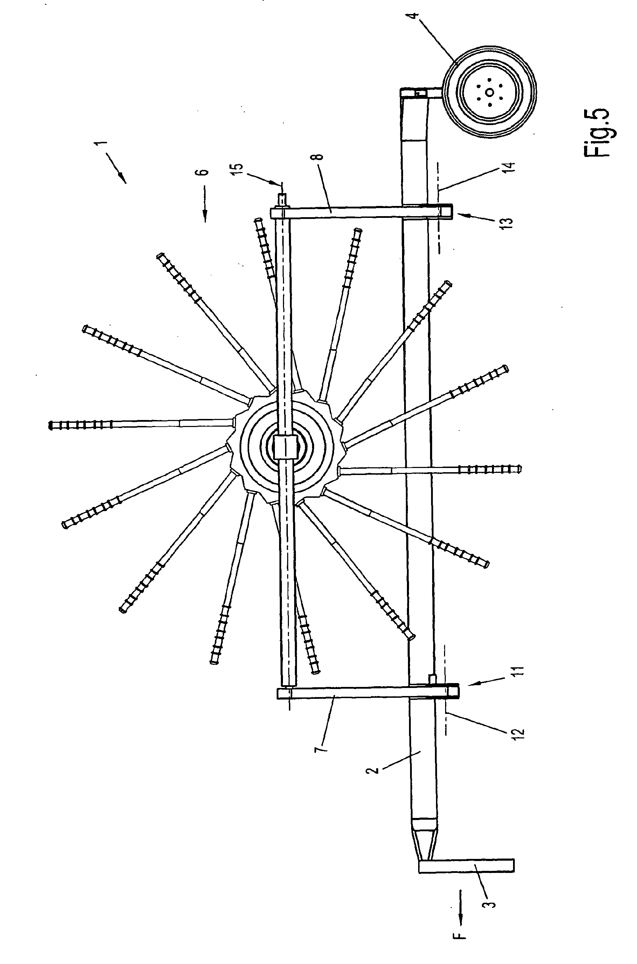

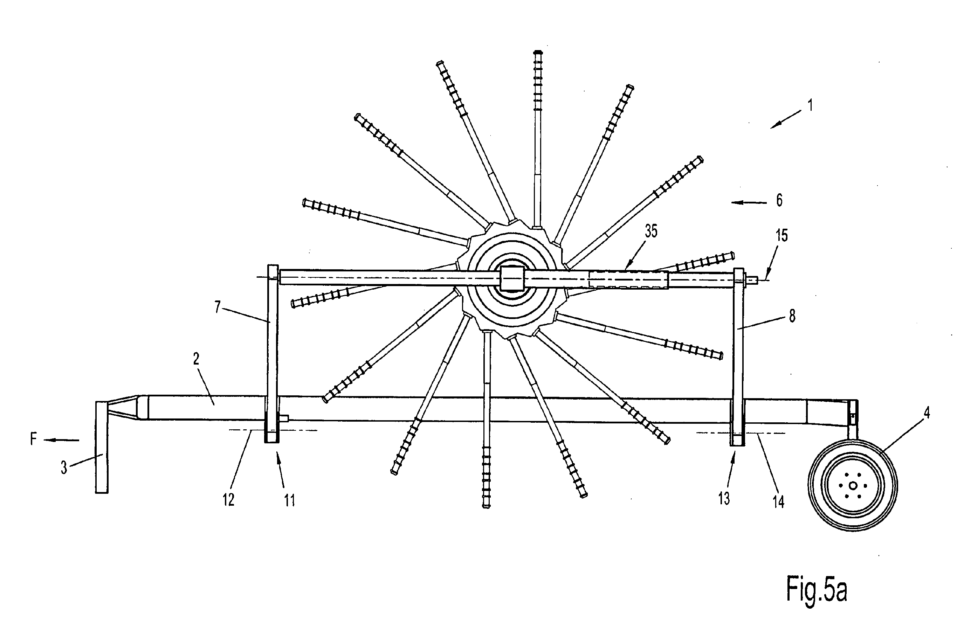

Damit es bei diesen Nickbewegungen nicht zu behinderten Verformungen bzw. Verzwängungen und ggf. Brüchen an den Lagerzapfen 27 der Anlenkpunkte 17,18 kommt, sind diese als sphärische Gelenke ausgebildet, wobei der Schiebesitz in dem Anlenkpunkt 18 ebenfalls einer Verzwängung entgegen wirkt. Gleiches kann auch beispielsweise mit einer Teleskopik 35 in dem Längsträger 19 vermieden werden, wobei dann beide Gelenkpunkte 17 und 18 als sphärische Festlager ausgebildet sein können, wie dieses in Fig. 5a dargestellt ist.

Alternativ können die Kugelgelenke auch durch Kardangelenke ersetzt werden und der Längenausgleich, der in dem vorgenannten Beispiel durch das Loslager ermöglicht wird, kann konstruktiv in dem seitlichen Längsträger 19, beispielsweise durch eine Teleskopik seinen Niederschlag finden.

Die momentane Lage der Nickachse ist auch abhängig von der Ausgestaltung des Fahrwerks mit dessen bodenkopierenden Stützrädern 34 unterhalb der Rechkreisel 6, da dieses in bekannter weise auch aus einem drei- oder auch vierrädrigem Maschinengestell mit und ohne Doppelschwingen bestehen kann. Auch können diese Stützräder teilweise oder auch völlig außerhalb des Konturenkreises 10 liegen, welches daher für die Anwendung der Erfindung nicht von Bedeutung ist.

Weiterhin kann der Rechkreisel 6 ebenfalls bedingt durch die Ausgestaltung der Anlenkpunkte 17 und 18 als fluchtende Zapfenlager auch Rollbewegungen um die Rollachse 15 ausführen, so das die Anlenkung eines Rechkreisels 6 nach der Erfindung während der Verfahrbewegung in der Betriebsstellung sich durch Roll- und Nickbewegungen in Verbindung mit Höhenlagenveränderungen den örtlichen Gegebenheiten des Bodenprofils anpassen können. Dabei übernehmen die Ausleger 7 und 8 die Führung der Rechkreisel 6 längs des Maschinengestells 2 und während der Fahrbewegung längs des Verfahrweges. Die Vortriebskraft für die Fahrbewegung der Rechkreisel 6 geht von den Traktionskräften des Zugfahrzeuges 33 aus und wird über das Maschinengestell 2 und über die Ausleger 7 und 8 und insbesondere über den vorderen Anlenkpunkt 17, ausgebildet als Festlager, auf diesen übertragen.

Dadurch bedingt, dass die Ausleger 7,8 außerhalb des Konturenkreises 10 liegen, kann der Rechkreisel während des Hochklappens um die Gelenkachse 15 der Lagerzapfen so verschwenkt werden, das die Zinkenspitzen 31 der Rechzinken 30 in der Transportstellung nicht nach außen, sondern nach innen der vertikalen Hauptlängsmittelebene 29 zugewandt sind, welches das Verletzungsrisiko an den Zinkenspitzen 31 bei hochgeklappten Rechkreiseln erheblich reduziert.

Dabei ist der Abstand 32 gegenüber der vertikalen Längsmittelebene so ausgelegt, dass die Ausleger 7 und 8 und die seitlichen Längsträger 19 in der Transportstellung gegenüber den Rechkreiseln 6 nunmehr außen liegen bzw. die Rechkreiseln 6 im inneren der zusammengeklappten Maschine liegen, so dass sich die Zinkenspitzen 31 der Rechzinken 30 in der Mitte des Kreiselschwaders 1 nahe der vertikalen Längsmittelebene gegenüber liegen.

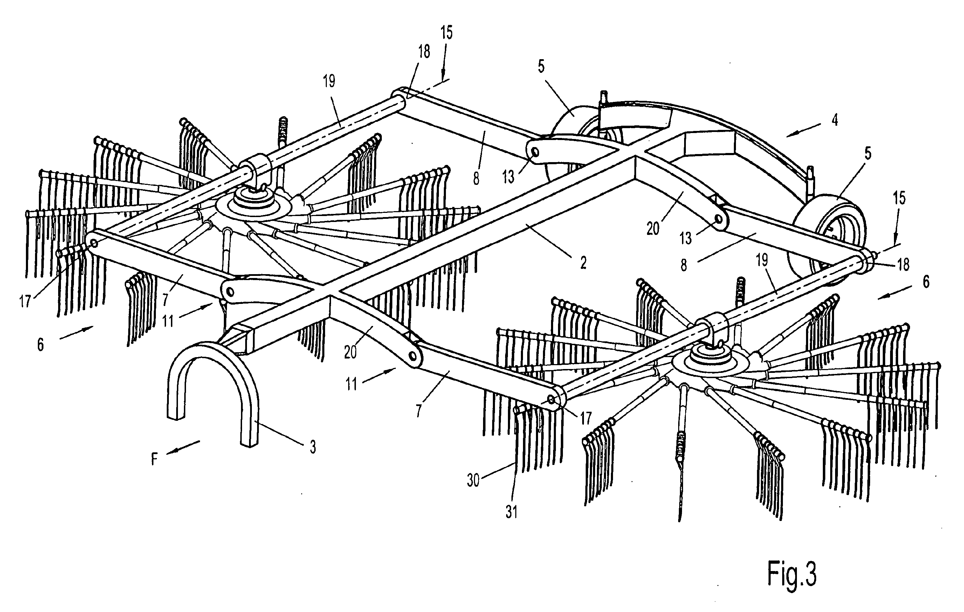

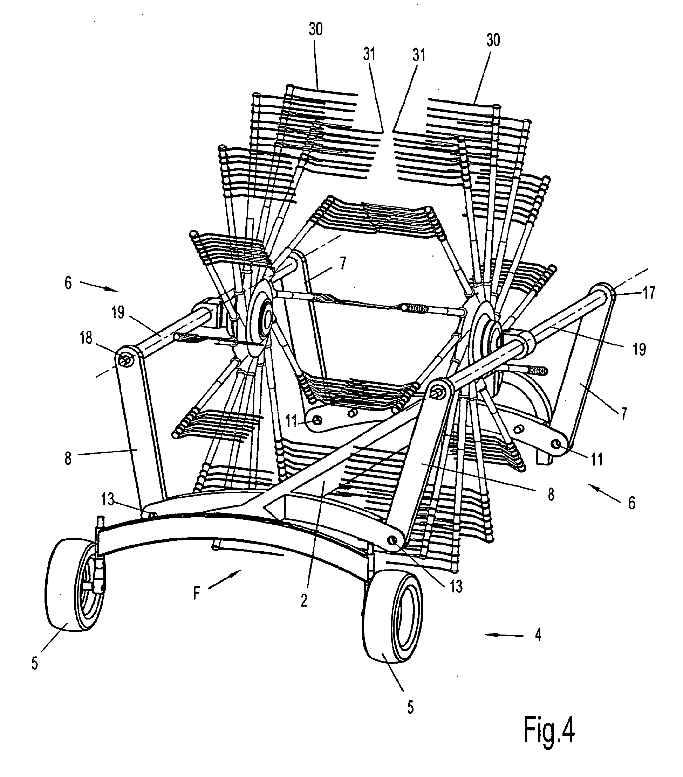

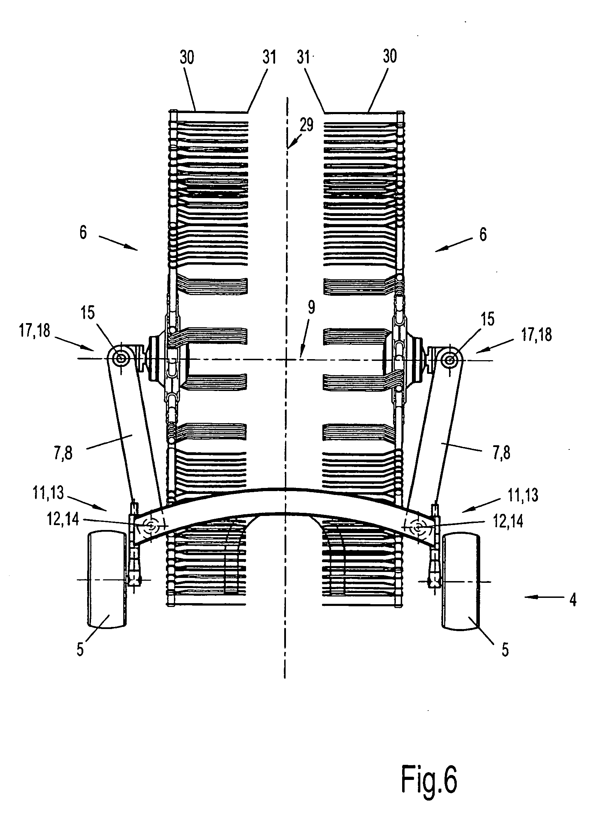

Dieses veranschaulichen in besonders deutlicher Form die Fig. 4, Fig. 5 und die Fig. 6. Anzumerken dabei ist, dass aus Gründen der besseren Übersichtlichkeit Stellantriebe und Antriebsstränge in den Figurendarstellungen nicht enthalten sind, die aber dem Fachmann in ihrer Gesamtheit durchaus bekannt sind und daher der näheren Erläuterung nicht bedürfen. Ebenfalls wurde aus Gründen der Übersichtlichkeit in den Fig. 3 bis Fig. 6 auf die Darstellung der Tast- und Stützräder der Rechkreisel verzichtet.

Desgleichen beinhaltet die erfinderische Ausgestaltung der Anlenkung der Rechkreisel an das Maschinengestell 2 den weiteren Vorteil, dass die Rechkreisel 6 in der Vorgewendestellung keiner Behinderung durch einen mittig angreifenden Ausleger mehr ausgesetzt sind.

Eine derartige Behinderung hat zur Folge, dass die Rechkreisel 6, um nicht mit ihrem Ausleger zu kollidieren schräg gegenüber dem Boden ausgehoben werden müssen, was dazu führt, dass sie entsprechend hoch im Vorgewende ausgehoben werden müssen, damit genügend Abstand gegenüber dem Boden erreicht wird. Dieses ist in der Praxis unerwünscht, da das hohe Ausheben sich zeitverzögernd auswirkt und dieses den Rechvorgang dadurch unnötig behindert. Beim darauffolgenden Absetzen des Rechkreisels 6 auf dem Boden werden die Stütz- und Tasträder ungleichmäßig abgesetzt und die rotierenden Rechzinken 30 können dabei in ungünstigen Fällen die Grasnarbe dadurch beschädigen. Die erfinderische Ausgestaltung hingegen ermöglicht das parallele Ausheben der Rechkreisel gegenüber dem Boden und vermeidet dadurch diesen Nachteil.

Der Bereich des Schwenkwinkels des Kreiselschwaders um die Achse 15 der Lagerzapfen 27 beträgt dabei etwa bis zu 200°, damit eine Verschwenken der Rechkreisel 6 um wenigstens 180° in die Transportstellung ermöglicht wird, und wobei dann noch zusätzlich ein Rechen am Hang bis zu etwa 20° gegenüber der Horizontalen möglich ist, wenn sich in dieser Situation dabei das Maschinengestell 6 auf der horizontalen Ebene abstützen würde.

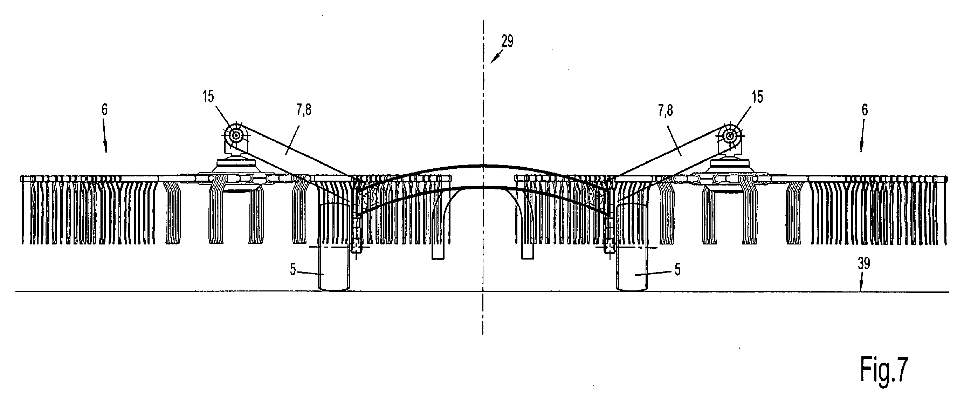

Fig. 7 zeigt einen Kreiselschwader nach der Erfindung in einer Stellung im Vorgewende mit angehobenen Rechkreiseln 6, die sich in einer Position befinden, bei der die Kreiselachse 9 trotz des angehobenen Zustands lotrecht gegenüber Aufstandsfläche ausgerichtet sind. Dieses beinhaltet auch dass sich der Zinkenspitzen 31 in einer etwa parallelen Ausrichtung gegenüber der Aufstandsfläche 39 befinden. Ermöglicht wird dieses dadurch, dass die Ausleger 7,8 außerhalb des Konturenkreises 10 liegen und daher nicht mit den Rechkreiseln 6 kollidieren können

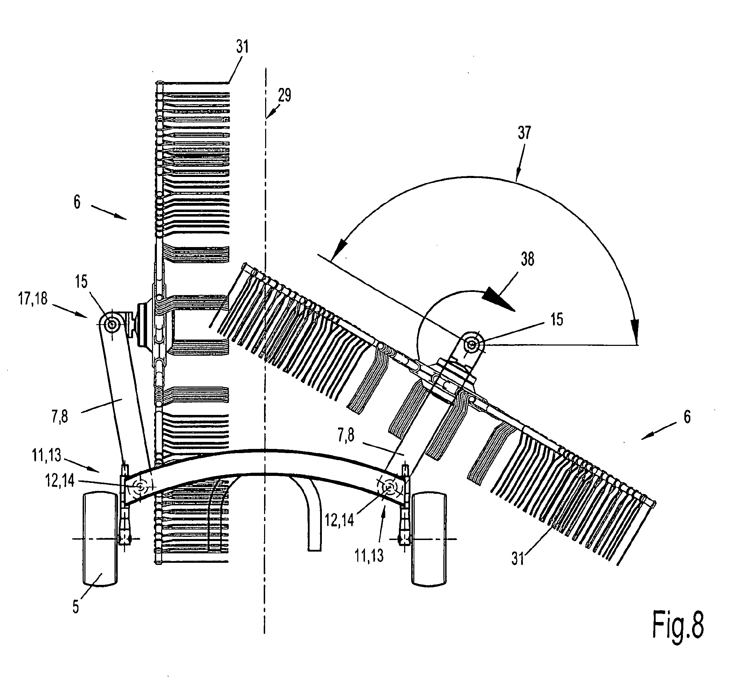

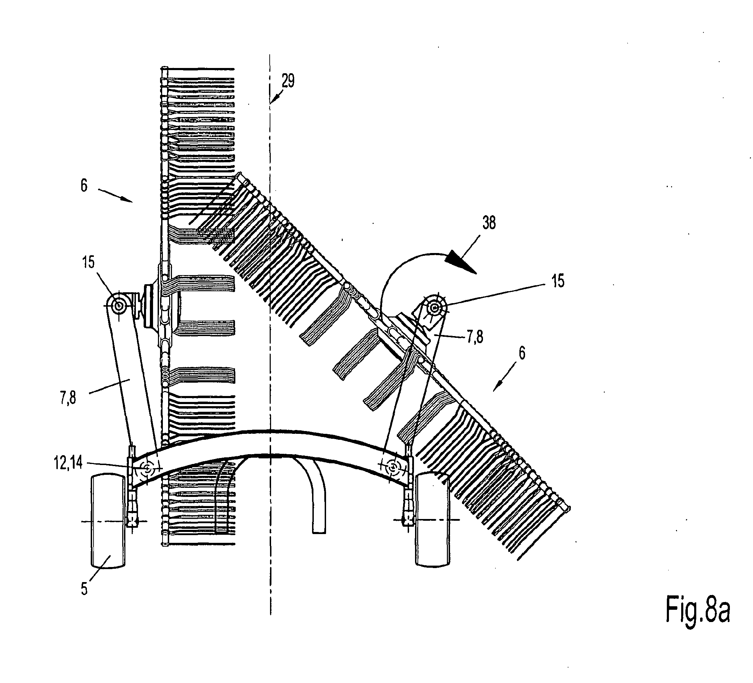

Fig.8 und Fig.8a zeigen den einen Kreiselschwader 1 nach der Erfindung in eine teils überführter Transportstellung in zwei verschiedenen Zwischenstellungen. Während des Hochschwenkens der Ausleger 7,8 um deren Schwenkachsen 12,14 verschwenken die Rechkreisel 6 in die Schwenkrichtung 38 derart, das sich die Zinkenspitzen 31 der vertikalen Längsmittelebene 29 und damit dem Inneren des Kreiselschwaders zuwenden. Der dazu erforderliche zu überstreichende Schwenkwinkel 37 der Rechkreisel 6 beträgt etwa 180°.

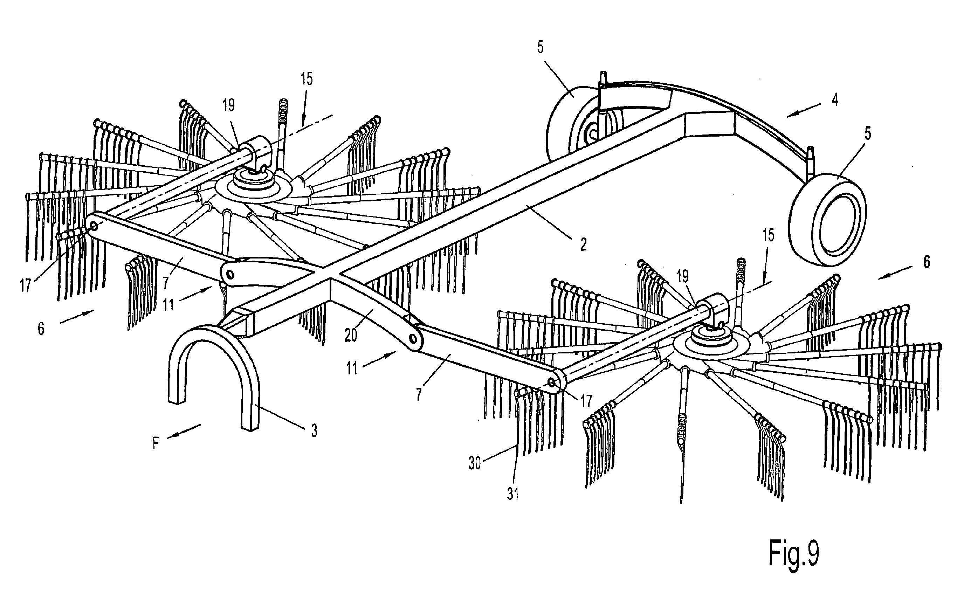

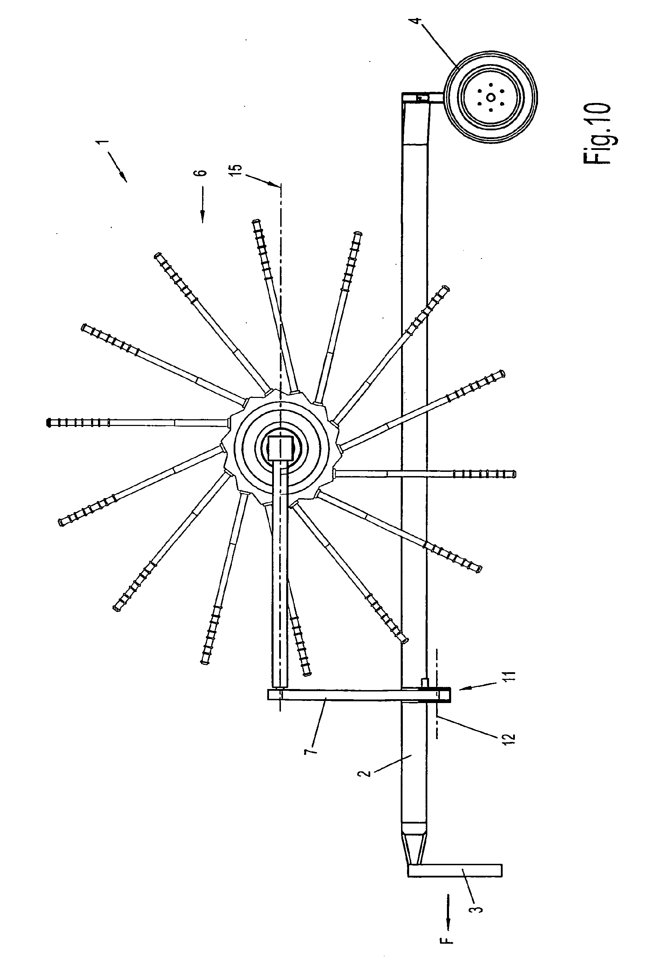

Fig.9 zeigt ein alternatives Ausführungsbeispiel nach der Erfindung mit nur einem in Fahrtrichtung vorgelagerten Ausleger 7 in seiner Betriebsstellung und Fig. 10 zeigt das gleiche Ausführungsbeispiel gemäß Fig.9 in seiner Transportstellung. Auch diese Ausführungsform ist prinzipiell geeignet, die zuvor dargelegten Vorteile der Erfindung anzuwenden.

Eine weitere vorteilhafte Ausgestaltung der Erfindung besteht darin, dass der Antriebsstrang für den Antrieb des Rechkreisels 6 so an diesen herangeführt wird, dass er etwa parallel zum seitlichen Längsträger 19 verläuft, so dass dabei eine Antriebsdrehmoment führende Gelenkwelle während des Hochklappens der Rechkreisel keine Verkürzung erfährt. Alternativ kann der Antriebsstrang auch durch den seitlichen Längsträger 19 hindurch geführt und von diesem gekapselt werden, so dass die Rollachse 15 und die Achse des Antriebsstrangs zusammen fallen.

Die Erfindung ist keineswegs auf Mehrkreiselschwader beschränkt, sondern sie kann ebenso auch auf Einkreiselschwader angewandt werden.

## Patentansprüche

1. Kreiselschwader (1) zum Anhängen an ein Zugfahrzeug mit wenigstens einem um eine aufrechte Kreiselachse (9) umlaufend angetrieben und durch Stütz- und Tasträder (34) am Boden abgestützten Rechkreisel (6) mit gesteuerten mit Rechzinken (30) besetzten Zinkenarmen zum Zusammenrechen von am Boden liegendem Erntegut, wobei der Rechkreisel (6) um wenigstens eine Schwenkachse eines Klappgelenks des Auslegers, welcher mit dem Maschinengestell (2) des Kreiselschwaders (1) verbunden ist, durch Verschwenken des Auslegers von einer Arbeits- in eine Vorgewende oder Transportstellung und umgekehrt überführbar ist , **dadurch gekennzeichnet, dass** dem wenigsten einen Rechkreisel (6) zwei äußere Auslegerarme (7,8), die ein Auslegerpaar bilden, zugeordnet sind, wobei der erste Ausleger (7) dem Rechkreisel (6) vorgelagert und der zweite Ausleger (8) dem Rechkreisel (6) nachgelagert ist und dass dessen äußere Anlenkpunkte (17,18) außerhalb des Konturenkreises (10) des Rechkreisels liegen.

2. Kreiselschwader (1) nach Anspruch 1 oder 2, **dadurch gekennzeichnet, dass** wenigstens ein Anlenkpunkt (17 oder 18) als sphärisches Gelenk ausgebildet sind.

3. Kreiselschwader (1) nach Anspruch 1 oder 2, **dadurch gekennzeichnet, dass** wenigstens ein Anlenkpunkt (17 oder 18) als Kugelgelenk ausgebildet ist.

4. Kreiselschwader (1) nach Anspruch 1 oder 2, **dadurch gekennzeichnet, dass** wenigstens eine Anlenkpunkt (17 oder 18) als Kardangelenk ausgebildet ist.

5. Kreiselschwader (1) nach Anspruch 2, **dadurch gekennzeichnet, dass** einer der Anlenkpunkte (17 oder 18) als Festlager und der andere Anlenkpunkt als Loslager ausgebildet ist.

6. Kreiselschwader (1) nach Anspruch 2, **dadurch gekennzeichnet, dass** der seitliche Längsträger (19) eine Teleskopik (35) aufweist, die eine Abstandsveränderung der Gelenkpunkte (17,18) insbesondere in der Betriebsstellung ermöglicht.

7. Kreiselschwader nach einem oder mehreren der vorhergehenden Ansprüche, **dadurch gekennzeichnet, dass** der wenigstens eine hochgeklappte Ausleger (7 oder 8) des wenigstens einen Rechkreisels (6) in seiner Transportstellung hinter dem Rechkreisel (6) eine außenliegende Anordnung aufweist.

8. Kreiselschwader nach einem oder mehreren der vorhergehenden Ansprüche, **dadurch gekennzeichnet, dass** der Schwenkwinkel (37) des Rechkreisels (6) um die Schwenkachse (15) der Lagerzapfen (27) wenigstens 180°, vorzugsweise etwa 200° beträgt.

9. Kreiselschwader nach einem oder mehreren der vorhergehenden Ansprüche, **dadurch gekennzeichnet, dass** die Zinkenspitzen (31) der Rechzinken (30) des wenigstens einen hochgeklappten Rechkreisels (6) in der Transportstellung in das Innere des Kreiselschwaders (1) gerichtet sind.

10. Kreiselschwader nach einem oder mehreren der vorhergehenden Ansprüche, **dadurch gekennzeichnet, dass** der Antriebsstrang für den Antrieb des Rechkreisels 6 so an diesen herangeführt wird, dass er etwa parallel zum seitlichen Längsträger 19 verläuft.

11. Kreiselschwader nach einem oder mehreren der vorhergehenden Ansprüche, **dadurch gekennzeichnet, dass** der Antriebsstrang für den Antrieb des Rechkreisels 6 durch seitlichen Längsträger 19 so hindurch geführt und von diesem gekapselt wird, dass die Rollachse 15 und die Achse des Antriebsstrangs etwa zusammen fallen.

## Claims

1. A rotary swather (1) for attachment to a tractor vehicle comprising at least one rotary rake (6) which is driven in rotation about an upright rotor axis (9) and which is supported on the ground by support and feeler wheels (34) with controlled tine arms fitted with rake tines (30) for raking together crop material which is lying on the ground, wherein the rotary rake (6) can be moved about at least one pivot axis of a pivot joint of the boom which is connected to the machine frame (2) of the rotary swather (1) by pivotal movement of the boom from a working position into a headland or transport position and vice-versa, **characterised in that** associated with the at least one rotary rake (6) are two outer boom arms (7, 8) which form a boom pair, wherein the first boom (7) is mounted in front of the rotary rake (6) and the second boom (8) is mounted behind the rotary rake (6) and that the outer pivot points (17, 18) thereof lie outside the contour circle (10) of the rotary rake.

2. A rotary swather (1) according to claim 1 or claim 2 **characterised in that** at least one pivot point (17 or 18) is in the form of a spherical joint.

3. A rotary swather (1) according to claim 1 or claim 2 **characterised in that** at least one pivot point (17 or 18) is in the form of a ball joint.

4. A rotary swather (1) according to claim 1 or claim 2 **characterised in that** at least one pivot point (17 or 18) is in the form of a cardan joint.

5. A rotary swather (1) according to claim 2 **characterised in that** one of the pivot points (17, 18) is in the form of a fixed mounting and the other pivot point is in the form of a movable mounting.

6. A rotary swather (1) according to claim 2 **characterised in that** the lateral longitudinal bearer (19) has a telescopic means (35) which permits a variation in the spacing of the pivot points (17, 18), in particular in the operating position.

7. A rotary swather according to one or more of the preceding claims **characterised in that** the at least one upwardly pivoted boom (7 or 8) of the at least one rotary rake (6) is of an outwardly disposed arrangement in its transport position behind the rotary rake (6).

8. A rotary swather according to one or more of the preceding claims **characterised in that** the pivot angle (37) of the rotary rake (6) about the pivot axis (15) of the mounting trunnions (27) is at least 180°, preferably about 200°.

9. A rotary swather according to one or more of the preceding claims **characterised in that** the tine tips (31) of the rake tins (30) of the at least one upwardly pivoted rotary rake (6) are directed into the interior of the rotary swather (1) in the transport position.

10. A rotary swather according to one or more of the preceding claims **characterised in that** the drive line for the drive for the rotary rake (6) is taken thereto in such a way that it extends approximately parallel to the lateral longitudinal bearer (19).

11. A rotary swather according to one or more of the preceding claims **characterised in that** the drive line for the drive for the rotary rake (6) is passed through the lateral longitudinal bearer (19) and encapsulated thereby in such a way that the rolling axis (15) and the axis of the drive line approximately coincide.

## Revendications

1. Andaineuse rotative (1) destinée à être attelée à un tracteur, comportant au moins une roue râteleuse (6) entraînée en rotation autour d'un axe de roue râteleuse (9) vertical et supportée sur le sol par l'intermédiaire de roues porteuses ou de roues suiveuses (34) ainsi que des bras porte-dents commandés, munis de dents de râtelage (30), pour regrouper le produit récolté reposant sur le sol, la roue râteleuse (6) pouvant être amenée d'une position de travail dans une position de virage ou de transport, et inversement, par pivotement du bras autour d'au moins un axe de pivotement d'une articulation dudit bras qui est liée au châssis (2) de l'andaineuse rotative (1), **caractérisée par le fait qu'**à la roue râteleuse (6), au nombre d'au moins une, sont associés deux bras (7, 8) extérieurs, qui forment une paire de bras, le premier bras (7) étant disposé devant la roue râteleuse (6) et le deuxième bras (8) derrière ladite roue râteleuse (6), et **par le fait que** les deux points d'articulation (17, 18) extérieurs de ceux-ci sont situés en dehors du cercle enveloppe (10) de la roue râteleuse.

2. Andaineuse rotative (1) selon la revendication 1 ou 2, **caractérisée par le fait qu'**au moins un point d'articulation (17 ou 18) est conformé en articulation sphérique.

3. Andaineuse rotative (1) selon la revendication 1 ou 2, **caractérisée par le fait qu'**au moins un point d'articulation (17 ou 18) est conformé en joint à rotule.

4. Andaineuse rotative (1) selon la revendication 1 ou 2, **caractérisée par le fait qu'**au moins un point d'articulation (17 ou 18) est conformé en joint de cardan.

5. Andaineuse rotative (1) selon la revendication 2, **caractérisée par le fait que** l'un des points d'articulation (17 ou 18) est conformé en palier fixe et l'autre point d'articulation en palier libre.

6. Andaineuse rotative (1) selon la revendication 2, **caractérisée par le fait que** le longeron latéral (19) comporte un dispositif télescopique qui permet une variation de la distance entre les points d'articulation (17, 18), notamment dans la position de travail.

7. Andaineuse rotative (1) selon une ou plusieurs des revendications précédentes, **caractérisée par le fait que** le bras relevé (7 ou 8), au nombre d'au moins un, de la roue râteleuse (6), au nombre d'au moins une, dans sa position de transport derrière la roue râteleuse (6), est disposé côté extérieur.

8. Andaineuse rotative (1) selon une ou plusieurs des revendications précédentes, **caractérisée par le fait que** l'angle de pivotement (37) de la roue râteleuse (6) autour de l'axe de pivotement (15) des paliers (27) est d'au moins 180°, de préférence est d'environ 200°.

9. Andaineuse rotative (1) selon une ou plusieurs des revendications précédentes, **caractérisée par le fait que** les extrémités (31) des dents de râtelage (30) de la roue râteleuse (6) relevée, au nombre d'au mois une, dans la position de transport, sont dirigées vers l'intérieur de l'andaineuse rotative (1).

10. Andaineuse rotative (1) selon une ou plusieurs des revendications précédentes, **caractérisée par le fait que** la chaîne de transmission pour l'entraînement de la roue râteleuse (6) est disposée de manière telle qu'elle s'étende sensiblement parallèlement au longeron latéral (19).

11. Andaineuse rotative (1) selon une ou plusieurs des revendications précédentes, **caractérisée par le fait que** la chaîne de transmission pour l'entraînement de la roue râteleuse (6) passe à l'intérieur du longeron latéral (19) et est encapsulée dans celui-ci, et que l'axe de pivotement (15) et l'axe de la chaîne de transmission coïncident sensiblement.
